# EUROPÄISCHE PATENTSCHRIFT

(11) **EP 3 740 607 B1**
(45) Veröffentlichungstag und Bekanntmachung des Hinweises auf die Patenterteilung: **06.03.2024**
(21) Anmeldenummer: 19700786.7
(22) Anmeldetag: 14.01.2019
(51) Int. Cl.: D01G 11/04

(54) **VERFAHREN ZUR WIEDERGEWINNUNG VON FASERN**
METHOD OF RECOVERING FIBERS
PROCÉDÉ DE RÉCUPÉRATION DE FIBRES

(30) Priorität: 19.01.2018 DE 102018101176
(43) Veröffentlichungstag der Anmeldung: 25.11.2020
(73) Patentinhaber: Adler Pelzer Holding GmbH, 58099 Hagen (DE)
(72) Erfinder: BERNHARDT, Siegfried, 28777 Bremen (DE); SCHULZE, Volkmar, 84069 Schierling (DE)
(74) Vertreter: Hannke Bittner & Partner mbB Regensburg
(86) Internationale Anmeldenummer: PCT/EP2019/050780
(87) Internationale Veröffentlichungsnummer: WO 2019/141619

(56) Entgegenhaltungen:
- EP-A1- 3 106 237
- DE-U1- 7 926 843
- JP-A- 2006 214 053

## Beschreibung

Gegenstand der Erfindung ist ein Verfahren zur Wiedergewinnung von Fasern aus nicht kaschierten, kaschierten und/ oder verformten Teppichresten und/oder Unterschichtresten von textilen Mehrschichtverbunden des Automobilbaus, insbesondere von Bodenverkleidungen oder Gepäckraumverkleidungen.

Die in der Automobilindustrie eingesetzten Bodenverkleidungen bestehen zumeist aus der Oberware (=Nutzschicht), einem Teppich mit verschiedenen Unterschichten; und der Isolation. Als Teppiche finden hier insbesondere Flachnadelvlies, Velours und Tufting Anwendung.

Bei Tufting-Teppichen wird als Garnmaterial PA6.6, PA6, PP, rPA und rPET; und bei den Velours- und Flachnadelvlies-Teppichen als Fasermaterial PET, PET/PP, PP, PA/PET und rPET vorwiegend eingesetzt. Der Tuftingträger bei den Tufting-Qualitäten besteht zumeist aus PET/PP, PET/coPET oder PET/PA. Die hier angewandten Fasereinbindungen um fassen insbesondere:
bei Tufting-Teppich vorwiegend EVA sowie PE und bei den Velours- und Flachnadelvlies-Teppichen SBR-Latex oder Acrylat; weiterhin bei Velours- und Flachnadelvlies-Teppichen Folien, Vliese, Klebstoffe (hot melts), thermoplastische Kunststoffe (vorwiegend PE) sowie das thermobonding (Klieverik; EP 1 598 476 B1). Des Weiteren finden zunehmend Bindefasern, EVA oder thermoplastische Dispersionen Anwendung.

Die Beschichtung, meist als Klebeschicht für Untervliese, aber auch zur Versteifung, umfasst vorwiegend PE oder PP.

Die Unterschichten (größtenteils Akustik- und/oder Versteifungsvliese) bestehen in der Regel aus PET- und Mischfaservliesen; als Dicht- oder Dämmfolien finden PE/PA- und PE/PA/PE-Folien, sowie Folienvliese PE/PA/PE+PET Anwendung.

Je nach akustischen Anforderungen werden auch sogenannte Schwerfolien eingesetzt. Zwischen Oberware und Karosserieboden befindet sich die Isolationsschicht insbesondere aus PUR-Schaum oder Vliesstrukturen. Der Schaum ist mit der Oberware fest verbunden (angeschäumt); die Vliesstrukturen können mit der Oberware ebenfalls fest verbunden sein (in der Regel verklebt); aber es findet auch ein reines Übereinanderlegen Anwendung.

Bei der Herstellung der Teppichware fallen heute etwa 6%, und bei der Herstellung der Bodenverkleidungen bis zu 30% Abfall (Konturbeschnitt) an.

Der Abfall bei der Flachnadelvlies- und Velours-Teppichherstellung (ohne Einbindung, ohne Beschichtung) wird üblicherweise wiederverarbeitet; meist gerissen und der Faseraufbereitung wieder zugeführt. Der Abfall bei der Bodenverkleidungs- und Gepäckraumverkleidungsherstellung geht üblicherweise in die Verbrennung (thermisches Recycling); auch findet dieser beispielsweise Anwendung für die Herstellung von Reitplatzböden (DE 101 47 676 C1, EP 1 285 997 B1).

Eine Wieder-/Weiterverarbeitung der hochwertigen Fasermaterialien von Teppich- und Unterschicht-Abfällen (Konturbeschnitt-Abfall), nach der Kaschierung und Verformung zu Bodenverkleidungen oder Gepäckraumverkleidungen im Automobilbau, findet nicht statt.

Der Abfall bei der Flachnadelvlies- und Velours-Teppichherstellung (ohne Einbindung, ohne Beschichtung; bzw. nur kleinsten Mengen) sowie von Akustik-/Versteifungsvliesen [Einzelvlies; nicht kaschierte, und nicht verformte Ware] wird wiederverarbeitet.

Auch gibt es Verfahren und Vorrichtungen, mit denen man, zum Beispiel einzelne Schichten oder Fasern der Teppichware vom Gesamtverbund trennt / separiert. Hierzu existieren im Stand der Technik Verfahren und Vorrichtungen, wie zum Beispiel:
Reißen:
   DE 100 52 262 A1, DE 196 21 916 A1, EP 0 740 001 A1.
Separieren (auch Tufting-Teppich):
   US 2013/0068865 A1, US 2015/0115075 A1, US 2013/0327858 A1, US 2015/0321383 A1,
   US 2015/0102138 A1, US 2013/0112790 A1, US 2016/0176006 A1, US 2016/0368171 A1,
   WO 2016/106024 A1, US 2012/0291601 A1, US 2013/0231030 A1, US 2012/0149284 A1,
   US 2012/0037734 A1, US 2014/0251545 A1, US 2015/0057379 A1 (mittels Aufheizen), US 2013/0112727 A1 (mittels Aufheizen), EP 3 141 366 A2 (mittels Aufheizen), US 2013/0174517 A1 (mittels Wasserbad).
Arbeiten mit Lösungsmittel:
   US 2016/0075848 A1.

Bekannt sind Verfahren zur Abfall-Aufarbeitung (Teppich mit Einbindung und Beschichtung; und ggf. Unterschichten) durch Extrusions-Verfahren:
DE 43 11 708 C2, US 2015/0322231 A1.

Weiterverarbeitung in Beschichtungen / Compounds = > Extrusionsbeschichtung:
US 2011/0244172 A1, WO 2017/004494 A1, US 2013/0344281 A1.

DE 29 12 18 A1 beschreibt eine Reißmaschine mit einem entsprechenden Verfahren zum Aufschließen und Regenerieren von faserigen Ausgangsmaterialien und Abfällen ohne diese näher zu spezifizieren. Das zu zerfasernde Material wird durch eine Aufgabeeinrichtung einer rotieren den Reißtrommel mit Reißzähnen zugeführt und mit einer im Materialfluss dahinter angeordneten Vliesbildungseinrichtung bestehend aus einer im Innenraum mit Unterdrück beaufschlagen Siebtrommel.

DE 41 21 024 A1 beschreibt ein Verfahren zum Aufarbeiten von Kunststoffbeschichteten textilen Stoffen, insbesondere von Kunststoff-hinter legten textilen Bodenbelägen und zum Wiedergewinnen der darin enthaltenen Textilfasern und Kunststoffen. Das Verfahren umfasst folgende Arbeitsschritte:
- Zerschneiden der aufzuarbeitenden Stoffe in kleine Schnitzel, etwa von der Größe 5 × 5 bis 10 × 10 mm²; Vermischen der Schnitzel mit Wasser unter Bildung einer pumpfähigen Masse;
- Zerkleinern der Schnitzel in einer Mühle unter Bildung von Pulpe;
- Entwässern und Trocknen der Pulpe:
- Mechanisches Trennen der Fasern vom entstandenen Kunststoffgranulat.

Des Weiteren wird eine Anlage zur Durchführung des Verfahrens beschrieben, welche durch folgende Baugruppen gekennzeichnet ist:
- einer aus Längs- und Querschneider bestehenden Zerschnitzelungs-Einreichung für die aufzuarbeitenden Stoffe;
- wenigstens einem Zwischenlager für die Schnitzel mit nachgeordneter Dosier- und Transport-Einrichtung;
- wenigstens einem Rührbehälter für die Herstellung der Schnitzel- Aufschwemmung;
- wenigstens einer Mühle für die Umwandlung der Schnitzel-Aufschwemmung in eine Pulpe;
- wenigstens einer Sieb-Vorrichtung mit nachgeordnetem Trockner;
- wenigstens einer mechanischen Trenneinreichung für die Trennung der Fasern vom entstandenen Kunststoffgranulat,
wobei die Baugruppen Rührbehälter, Mühle und Siebvorrichtung durch absperrbare Flüssigkeitsleitungen miteinander verbunden sind.

DE 2003 398 betrifft ein Verfahren und eine Vorrichtung zum Überführen von Textilabfällen in ein gewerblich verwertbares Erzeugnis, insbesondere unverstreckte oder kaltverstreckte Endlosfäden aus synthetischen Polymerisations- oder Polykondensationsprodukten.

DE 7926843 U1 beschreibt eine Reißmaschine für textile Abfälle, insbesondere Teppichreste, bestehend aus einem Einzugförderer mit ein- oder mehrfach hintereinander angeordneten Tambour- und Siebtrommeleinheiten und mit einem unter diesen Einheiten angeordneten Pitzenrückführungsband, wobei der Innenraum der einzelnen Siebtrommeln mit einer Absaugeinrichtung in Verbindung steht.

EP 3106237 A1 beschreibt eine Vorrichtung zur Wiederverwertung von Altteppich- und Filzabfall aus dem Automobilbau umfassend eine Beschickungseinheit, die dafür ausgestaltet ist, Schnittabfälle zu transportieren, eine Zuführeinheit, die eine Zuführwalze umfasst und eine Trennungseinheit, die von der Zuführeinheit beabstandet ist und dafür ausgestaltet ist, an einer Fläche der Abfälle, die von der Zuführeinheit zugeführt werden, eine Reibungskraft zu erzeugen und die Abfälle in Fasern und Harz zu trennen.

Zum einen sind die im Stand der Technik dargelegten Verfahren und Vorrichtungen zum Aufarbeiten von Teppichabfall sehr aufwendig; und die letztlich erzeugten "Rezyklate" zu teuer; zum anderen werden die speziell in der Automobilzulieferindustrie anfallenden Bodenverkleidungs- und Gepäckraumverkleidungsabfälle (Konturbeschnitte) -Teppich + Untervliese + gegebenenfalls Dicht- oder Dämmfolien, kaschiert und verformt- häufig nicht aufgearbeitet. Die darin enthaltenen Fasern werden also nicht immer wiederverwertet Aufgabe der Erfindung ist es, ein Verfahren zur Rückgewinnung von Fasern aus nichtkaschierten, kaschierten und verformten Bodenverkleidungs- und Gepäckraumverkleidungsabfällen insbesondere von Kraftfahrzeugen bereitzustellen; und diese zur Herstellung von Vliesstoffen oder Schallisolationsbauteilen im Automobilbau, insbesondere Vliesen (airlay-Vlies, Nadelvlies, Struto-Vlies) und Isolationen (pads, Vlies-Formlingen, Faser-Flock-Bauteilen) wieder einzusetzen.

Das erfindungsgemäße Verfahren soll es ermöglichen, die Fasern von Teppich- und Unterschicht-Abfall (Konturbeschnitt-Abfall), nach der Kaschierung und Verformung zu Bodenverkleidungen oder Gepäckraumverkleidungen im Automobilbau wieder zu nutzen, und in Vliesstoffen und Schallisolationsbauteilen wiedereinzusetzen.

Diese Aufgabe wird gelöst durch die Merkmale des Anspruchs 1.

In einer ersten Ausführungsform der Erfindung wird die vorgenannte Aufgabe gelöst durch ein Verfahren zur Wiedergewinnung von Fasern von textilen Mehrschichtverbunden des Automobilbaus aus nicht kaschierten, kaschierten und/oder verformten Teppichresten und/oder Unterschichtresten, insbesondere Bodenverkleidungen oder Gepäckraumverkleidungen wobei man
1. die Reste auf eine gewünschte Größe, insbesondere von wenigstens 100×100mm² durch Schneiden in einer Schneidanlage in Längs- und Querrichtung schneidet,
2. die geschnittenen Reste einem ersten Reißvorgang mit einem oder zwei Walzeneinzügen auflöst,
3. die Fasern grob von den Staub- und Pulveranteilen abtrennt,
4. die abgetrennten Fasern einer Dosierung und gegebenen falls Speicherung zuführt,
5. die Fasern gegebenenfalls befeuchtet oder bedampft, insbesondere klimatisiert,
6. die Fasern wenigstens einem zweiten kontinuierlichen Reißvorgang unterwirft und
7. die erhaltenen Fasern zur Herstellung von Vliesstoffen oder Schallisolationsbauteilen im Automobilbau einsetzt.

Mit dem erfindungsgemäßen Verfahren ist es möglich, die Fasern von Teppich- und Unterschicht-Abfall (Konturbeschnitt-Abfall), nach der Kaschierung und Verformung zu Bodenverkleidungen oder Gepäckraumverkleidungen im Automobilbau, wieder zu nutzen, und in Vliesstoffen und Schallisolationsbauteilen wiedereinzusetzen.

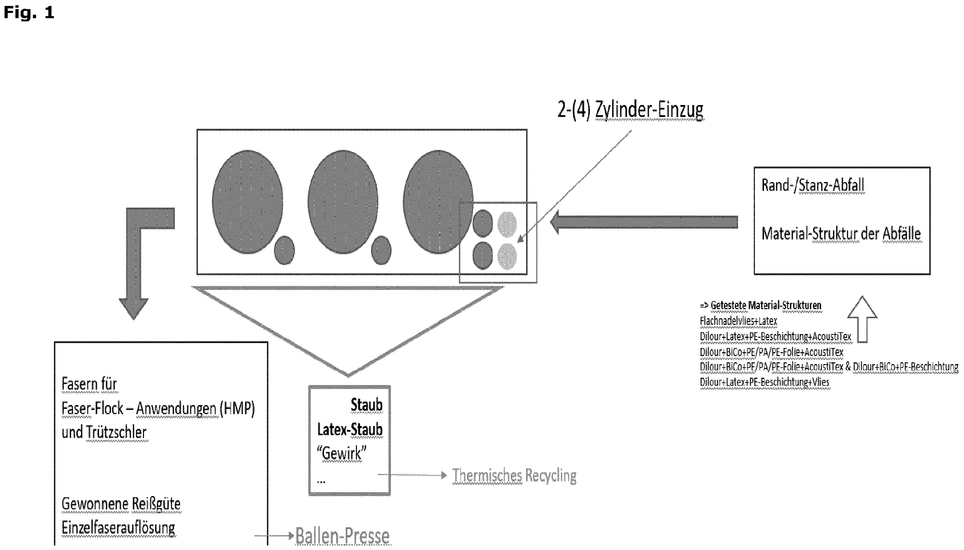

In der Fig. 1 wird ein Verfahren dargestellt, das nicht unter die Ansprüche fällt.

Die Rand- und Stanzabfälle der nicht kaschierten, kaschierten und/oder verformten Teppichresten und/oder Unterschichtresten von textilen Mehrschichtverbunden, insbesondere Bodenverkleidungen oder Gepäckraumverkleidungen des Automobilbaus werden in unterschiedlichen Größen auf einen Auflagetisch des Reißers gelegt. Dabei kann es zu sehr großen Gewichtsschwankungen der Vorlage, in Bezug auf die Dicke (mm) sowie die Faserlage des Materials (MD/CD) kommen.

Bei der Verwendung eines Walzeneinzuges, anstelle eines Muldeneinzuges, an dieser Stelle, ist die Einlaufgeometrie bis zur Reißwalze größer. [Bei einem Walzendurchmesser von beispielsweise 104 mm beträgt der freie Abstand für die Faserverbunde ca. 52 mm, Klemmpunkt bis zur Reißwalze.] Damit wird mehr Raum geschaffen für die Materialien unabhängig von der Längs- oder Quervorlage, sowie der Dicke.

Hiermit erhält man eine bessere Materialdosierung für die 1. Reißwalze.

Die vorzugsweise auf den Einzugswalzen befindlichen Ganzstahlgarnituren (Beschlag) haben noch den Vorteil einer entsprechenden Rückhaltekraft. Damit wird verhindert das sogenannte "Durchzieher" also lange Stücke unkontrolliert eingezogen werden.

Die Einzugswalzen können zueinander (Abstand) je nach Material eingestellt sowie auch im Abstand zur 1. Reißwalze variiert werden. Dieses kann mechanisch oder über Verstellmotoren erfolgen.

Wichtig auch hierbei vorzugsweise, eine Walze federnd zu lagern (nach oben) um Ungleichmäßigkeiten der Vorlage auszugleichen.

Wie bei diesen Systemen des Einzuges kann mit einer Metallüberwachung und einer mechanischen Überlast, eine Sicherung erfolgen.

Vorzugsweise werden die Fasern vor dem 2. Reißen befeuchtet oder bedampft, beziehungsweise klimatisiert.

Bei einem nicht erfindungsgemäßen Konzept mit drei Reißwalzen, ohne Vorzerkleinerung der Vorlage ist die Ausführung gemäß Fig. 1 vorzugsweise vorzusehen.

Der Vorteil liegt dann darin, die Walzen 2 und 3, besser einstellen zu können. Der Abstand der Mulde zu den Reißwalzen 2 und 3 wird dichter. Die Qualität wird damit deutlich verbessert.

Damit verbunden ist auch, dass der Anteil von nicht zu verwendenden Materialien unterhalb des Einzuges (1. Reißer) nicht in den Prozess ein gebunden wird (Plastik, Holz und ähnliches).

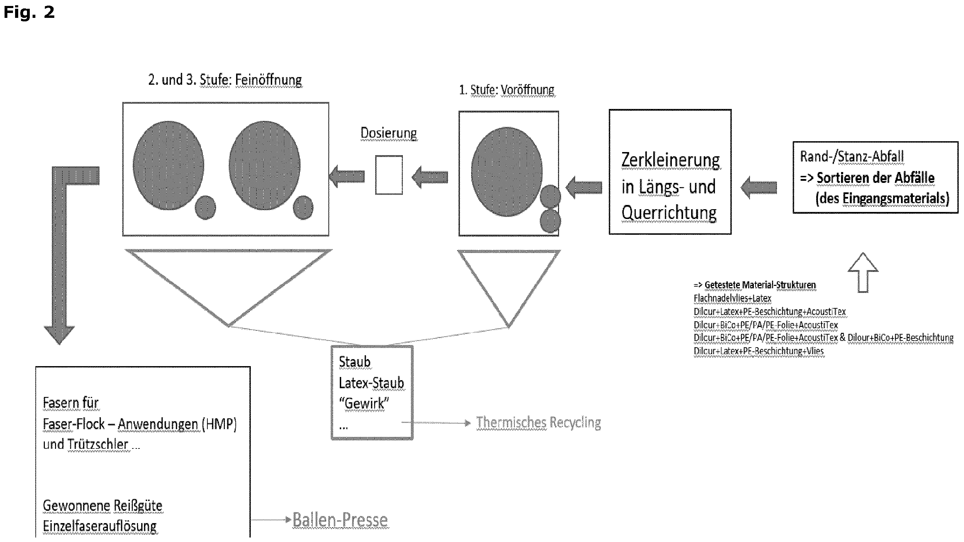

Unter den Walzeneinzügen der Reißer 2 und 3 wird dann nur überwiegend Staub anfallen. In der Fig. 2 wird die Ausführungsform gemäß des erfindungsgemäßen Verfahrens mit Vorzerkleinerung und Voröffnung beschrieben.

Die anfallenden Rand- und Stanzabfälle der nicht kaschierten, kaschierten und/oder verformten Teppichresten und/oder Unterschichtresten von textilen Mehrschichtverbunden, insbesondere Bodenverkleidungen oder Gepäckraumverkleidungen des Automobilbaus werden je nach Qualität einer Schneidanlage vorgelegt. Der Schneidprozess erfolgt sowohl in Längs- als auch in Querrichtung. Damit erhält man definierte Stücke mit einer optimierten Größe, insbesondere von wenigstens 100×100mm². Die Abstände der Schneidmesser können dabei sowohl konstant als auch variabel sein.

Über ein Förderband wird das geschnittene Material in einen Zwischenspeicher transportiert, der beispielsweise ein Nadellattentuch und in einen in der Breite einstellbaren Schacht mit Austragswalzen und einem darunterliegenden Band umfasst.

Vom Förderband wird das Gut zum Walzeneinzug der 1. Reißers gefördert. Der 1. Reißer bringt das jetzt schon besser aufgelöste Material über einen Kondenser in einen Dosierschacht mit anschließender Bandwaage.

Die Bandwaage übernimmt jetzt die Funktion der Mengenüberwachung pro Zeiteinheit oder Menge. Damit wird sichergestellt, dass immer eine definierte Menge für den 2. Reißer ansteht. Auch hier werden vorzugsweise die Fasern vor dem 2. Reißen befeuchtet oder bedampft, beziehungsweise klimatisiert.

Eine gleichmäßige Produktion sorgt für eine konstante Faseröffnung und damit für eine gleichbleibende Qualität.

Auch kann dieses System dann besser auf die unterschiedlichen Eingangsqualitäten angepasst werden.

Mit der Trennung von Voröffnung und Feinöffnung, können die mechanischen Einstellungen besser angepasst werden. Der Antrieb und die Stromaufnahme können kleiner gewählt werden. Die Bestückung der Walzen-Stifte kann entsprechend optimiert werden, d.h. entsprechend der zu öffnenden Materialstruktur kann die "Vor-Reißgüte" gezielt beeinflusst werden.

Auch ist die Auslegung dieses Konzeptes als Konti-System, d.h. ein kontinuierlicher Faserdurchlauf durch die Anlage möglich.

Die Bandwaage steuert auch hier das gesamte System. Voraussetzung ist es, die Einzüge und idealer Weise auch die Reißwalzen 2 und 3 vom Antrieb her regelbar zu gestalten. Damit kann gezielt auf die Reiß-Faserlänge Einfluss genommen werden.

Der wesentliche Kern der vorliegenden Erfindung liegt damit zum einen in der Bereitstellung eines Verfahrens zur Trennung von verpresstem, eingebundenem, zum Teil beschichteten Fasermaterial aus textilen Materialverbunden (Bodenverkleidungen und Gepäckraumverkleidungen) und zum anderen in der Wieder-/Weiterverarbeitung der hochwertigen Fasermaterialien beispielsweise zu Vliesen (airlay-Vlies, Nadelvlies, Struto-Vlies) und Isolationen (pads, Vlies-Formlingen, Faser-Flock-Bauteilen).

Die Vorteile liegen insbesondere in der Einsparung von neuen Rohstoffen/Materialien, der Energieeinsparung und einer geringeren Umweltbelastung.

Darüber hinaus werden die Kosten gegenüber dem Stand der Technik deutlich reduziert; bauteilseitig wie auch personalseitig.

Wenn man das thermische Recycling (Verbrennung) mit betrachtet; ist eine fast vollständige Verwertung von Abfällen gegeben.

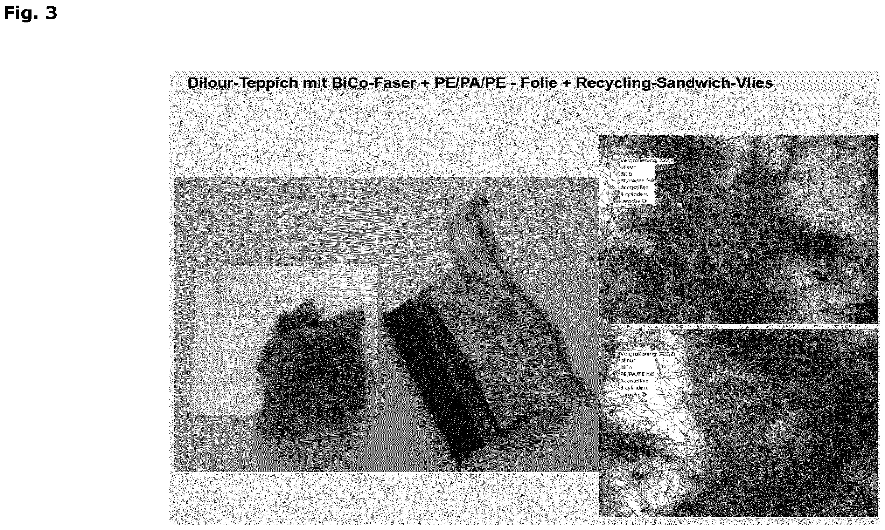

Der Konturbeschnitt bei der Herstellung einer Bodenverkleidung, nach der Verformung des Mehrschichtverbundes und dessen Stanz-Beschnittes, besteht beispielsweise aus der folgenden Materialstruktur, die in der Fig. 3 dargestellt ist:
560 g/m² PET-Teppich, eingebunden mit 20% (Bikomponenten) BiCo- Faser, eine PE/PA/PE-Folie (IOOprn) und einem Recycling-Sandwich-Untervlies (900 g/m², PET/PP/BiCo).

Das Reißen erfolgte durch Anwendung des erfindungsgemäßen Verfahrens nach Fig. 2 mit Vorzerkleinerung und Voröffnung.

Durch die Verkleinerung der vorgelegten Abfälle, ließ sich nach dem 1. Reißer eine gute Einstellung für den Prozess finden.

Die aus dem Dosierschacht kommenden Materialien konnten über die Bandwaage definiert in die Reißer 2 und 3 gegeben werden.

Die Bandwaage regelte hierbei die Produktion.

Weicht das Gewicht auf der Bandwaage ab + oder - (in Grenzen bis beispielsweise 50%), regelt der Einzug sich entsprechend herauf oder herunter.

Das Regelsystem war so ausgelegt, das auch die Anlagen davor sich den Geschwindigkeiten anpassten.

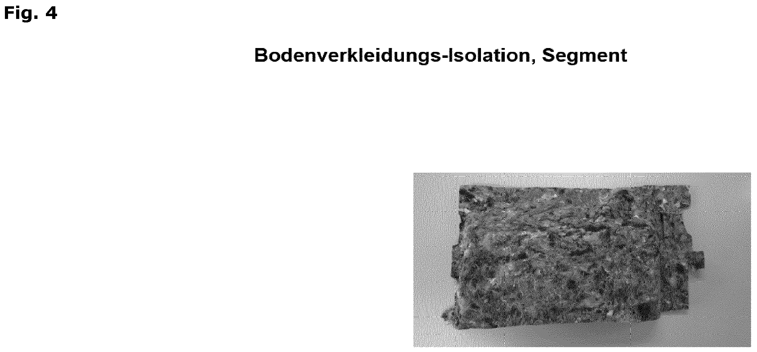

Die so getrennten Fasern (siehe Fig. 3) wurden bei der Herstellung einer Bodenverkleidungs-Isolation im Faser-Flock-Verfahren wiederverwendet. Ein Segment dieser Isolation ist in Fig. 4 zu sehen.

Die Isolation wurde entsprechend den Anforderungen der Automobilindustrie geprüft; u.a. TVOC, Formaldehyd, Acetaldehyd, Geruch, Fog ging, mechanischen und thermischen Anforderungen.

Alle Anforderungen wurden erfüllt!

Ein weiterer Test wurde mit der folgenden Materialstruktur durchgeführt:
560 g/m² PET-Teppich, 120 g/m² Latex, 120 g/m² PE-Beschichtung und einem Recycling-Sandwich-Untervlies (900 g/m², PET/PP/BiCo).

Deutlich wurde festgestellt, dass auch der Latex durch das erfindungsgemäße Verfahren von den Fasern getrennt wurde. Dieser rieselte in Partikelform heraus.

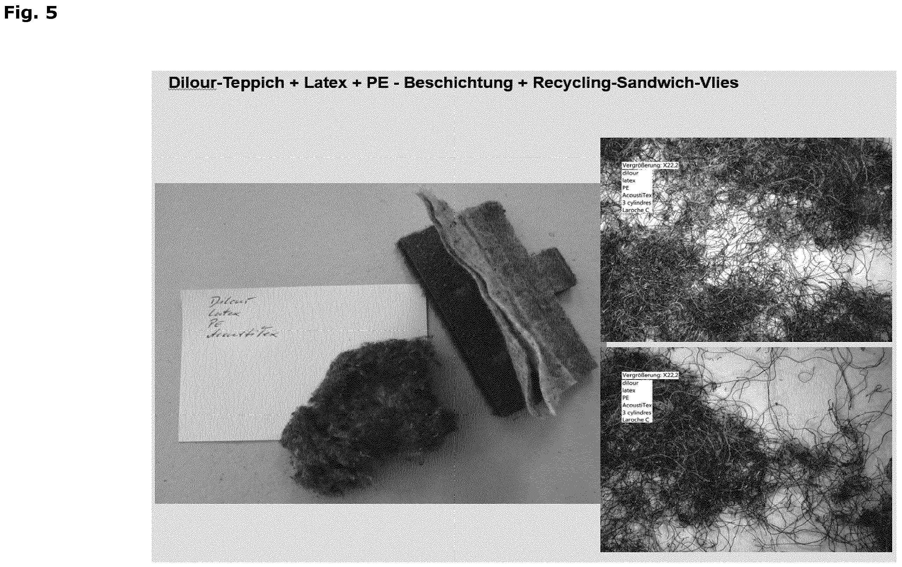

Auch hier wurden die Fasern (Fig. 5) bei der Herstellung einer Boden- verkleidungs-Isolation im Faser-Flock-Verfahren wiederverwendet.

Alle Prüfungen entsprachen den Anforderungen der Automobilindustrie. Hervorzuheben ist, dass trotz der Latex-Einbindung des Teppichs die Emissionswerte eingehalten wurden.

## Patentansprüche

1. Verfahren zur Wiedergewinnung von Fasern von textilen Mehrschichtverbunden des Automobilbaus aus nicht kaschierten, kaschierten und/oder verformten Teppichresten und/oder Unterschichtresten wobei **man**
1. die Reste auf eine gewünschte Größe durch Schneiden in einer Schneidanlage in Längs- und Querrichtung schneidet,
2. die geschnittenen Reste einem ersten Reißvorgang mit einem oder zwei Walzeneinzügen auflöst,
3. die Fasern grob von den Staub- und Pulveranteilen abtrennt,
4. die abgetrennten Fasern einer Dosierung und gegebenenfalls Speicherung zuführt,
5. die Fasern wenigstens einem zweiten kontinuierlichen Reißvorgang unterwirft und
6. die erhaltenen Fasern zur Herstellung von Vliesstoffen oder Schallisolationsbauteilen im Automobilbau einsetzt.

2. Verfahren nach Anspruch 1,
**dadurch gekennzeichnet, dass**
man Fasern aus Bodenverkleidungen oder Gepäckraumverkleidungen des Automobilbaus einsetzt.

3. Verfahren nach einem der Ansprüche 1 bis 2,
**dadurch gekennzeichnet, dass**
man die abgetrennten Fasern befeuchtet oder bedampft, insbesondere klimatisiert.

4. Verfahren nach Anspruch 1,
**dadurch gekennzeichnet, dass**
sich auf Einzugswalzen Ganzstahlgarnituren befinden.

5. Verfahren nach Anspruch 4,
**dadurch gekennzeichnet, dass**
die Einzugswalzen zueinander je nach Material eingestellt werden können sowie auch im Abstand zu einer ersten Reißwalze variiert werden können.

6. Verfahren nach Anspruch 1,
**dadurch gekennzeichnet, dass**
geschnittenes Material über ein Förderband in einen Zwischenspeicher transportiert wird.

7. Verfahren nach dem vorangegangenen Anspruch,
**dadurch gekennzeichnet, dass**
der Zwischenspeicher ein Nadellattentuch und einen in der Breite einstellbaren Schacht mit Austragswalzen und einem darunterliegenden Band aufweist.

8. Verfahren nach Anspruch 6,
**dadurch gekennzeichnet, dass**
die Reste von dem Förderband zu einem Walzeneinzug eines ersten Reißers gefördert werden und der erste Reißer das jetzt schon besser aufgelöste Material über einen Kondenser in einen Dosierschacht mit anschließender Bandwaage bringt.

9. Verfahren nach dem vorangegangenen Anspruch,
**dadurch gekennzeichnet, dass**
die Bandwaage die Funktion der Mengenüberwachung pro Zeiteinheit und Menge übernimmt.

10. Verfahren nach Anspruch 2,
**dadurch gekennzeichnet, dass**
die Bodenverkleidungen aus einer Oberware, einem Teppich mit verschiedenen Unterschichten und einer Isolation bestehen.

## Claims

1. Method for the recovery of fibers of textile multilayer composites of automotive construction from non-laminated, laminated and/or deformed carpet scraps and/or underlayer scraps, wherein one
1. cuts the scraps to a desired size by cutting them lengthwise and crosswise in a cutting machine,
2. dissolves the cut scraps in a first tearing process with one or two roller feeds,
3. roughly separates the fibers from the dust and powder components,
4. the separated fibers are dosed and, if necessary, stored,
5. the fibers are subjected to at least a second continuous tearing process and
6. the fibers obtained are used for the production of nonwovens or sound insulation components in automotive engineering.

2. Method according to claim 1,
**characterized in that**
fibers from floor coverings or luggage compartment coverings in the automotive industry are used.

3. Method according to one of claims 1 to 2,
**characterized in that**
the separated fibers are moistened or steamed, in particular air-conditioned.

4. Method according to claim 1,
**characterized in that**
all-steel wires are located on feed rollers.

5. Method according to claim 4,
**characterized in that**
the feed rollers can be adjusted relative to one another depending on the material and can also be varied in their distance from a first tearing roller.

6. Method according to claim 1,
**characterized in that**
cut material is transported via a conveyor belt to an intermediate store.

7. Method according to the preceding claim,
**characterized in that**
the intermediate store has a needle lath cloth and a width-adjustable chute with discharge rollers and an underlying belt.

8. Method according to claim 6,
**characterized in that**
the scraps are conveyed from the conveyor belt to a roller feed of a first shredder and the first shredder transports the material, which is now already better dissolved, via a condenser into a metering shaft with a subsequent belt weigher.

9. Method according to the preceding claim,
**characterized in that**
the belt weigher assumes the function of monitoring the quantity per unit of time and quantity.

10. Method according to claim 2,
**characterized in that**
the floor coverings consist of an outer fabric, a carpet with different underlayers and an insulation.

## Revendications

1. Procédé de récupération de fibres de composites multicouches textiles de l'industrie automobile à partir de résidus de tapis et/ou de résidus de sous-couche non contrecollés, contrecollés et/ou déformés, dans lequel on
1. coupe les résidus à une grandeur souhaitée par découpe dans une installation de coupe dans le sens longitudinal et transversal,
2. décompose les résidus coupés un premier processus de rupture avec une ou deux alimentations de rouleau,
3. sépare les fibres grossièrement des parts de poussière et de poudre,
4. fournit les fibres séparées à un dosage et éventuellement un stockage,
5. soumet les fibres au moins à un second processus de rupture continu et
6. utilise les fibres obtenues pour la fabrication de non-tissés ou composants d'insonorisation dans l'industrie automobile.

2. Procédé selon la revendication 1,
**caractérisé en ce que**
on utilise des fibres issues de revêtements de sol ou de revêtements de coffre à bagages de l'industrie automobile.

3. Procédé selon l'une quelconque de revendications 1 à 2,
**caractérisé en ce que**
on humidifie ou vaporise, en particulier climatise les fibres séparées.

4. Procédé selon la revendication 1,
**caractérisé en ce que**
des garnitures tout acier se trouvent sur des rouleaux d'alimentation.

5. Procédé selon la revendication 4,
**caractérisé en ce que**
les rouleaux d'alimentation peuvent être ajustés les uns par rapport aux autres selon le matériau ainsi que peuvent aussi être variés à distance par rapport à un premier rouleau de rupture.

6. Procédé selon la revendication 1,
**caractérisé en ce que**
du matériau coupé est transporté par le biais d'une bande transporteuse dans un dispositif de stockage intermédiaire.

7. Procédé selon la revendication précédente,
**caractérisé en ce que**
le dispositif de stockage intermédiaire présente un tablier à pointes et une cuve réglable dans la largeur avec des rouleaux de déversement et une bande se trouvant dessous.

8. Procédé selon la revendication 6,
**caractérisé en ce que**
les résidus sont transportés par la bande transporteuse à une alimentation de rouleau d'un premier effilocheur et le premier effilocheur amène le matériau maintenant déjà mieux décomposé par le biais d'un condenseur dans une cuve de dosage avec une balance à bande contigüe.

9. Procédé selon l'une quelconque des revendications précédentes, **caractérisé en ce que**
la balance à bande assure la fonction de surveillance de la quantité par unité de temps et quantité.

10. Procédé selon la revendication 2,
**caractérisé en ce que**
les revêtements de sol se composent d'un produit supérieur, d'un tapis avec différentes sous-couches et une isolation.
